(19) Europäisches Patentamt
European Patent Office
Office européen des brevets

(11) **EP 4 136 975 A1**

(12) **DEMANDE DE BREVET EUROPEEN**

(43) Date de publication:
**22.02.2023 Bulletin 2023/08**

(21) Numéro de dépôt: **22183943.4**

(22) Date de dépôt: **11.03.2015**

(51) Classification Internationale des Brevets (IPC):
**A01P 13/00** (2006.01)      **A01N 35/10** (2006.01)
**A01N 43/60** (2006.01)

(52) Classification Coopérative des Brevets (CPC):
(C-Sets disponibles)
**A01N 43/60**                                    (Cont.)

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.03.2014 FR 1451983**
**11.03.2014 FR 1451982**

(62) Numéro(s) de document de la (des) demande(s)
initiale(s) en application de l'article 76 CBE:
**20181751.7 / 3 735 829**
**15714863.6 / 3 116 321**

(71) Demandeur: **Arysta Lifescience**
**64150 Nogueres (FR)**

(72) Inventeurs:
• **GUICHARD, Aurélien**
**64170 Cescau (FR)**

• **SEPULCHRE DE CONDE, Christophe**
**64000 Pau (FR)**

(74) Mandataire: **HGF**
**HGF Limited**
**1 City Walk**
**Leeds LS11 9DX (GB)**

Remarques:
•Cette demande a été déposée le 08-07-2022 comme demande divisionnaire de la demande mentionnée sous le code INID 62.
•Revendications déposées après la date de dépôt de la demande / date de réception de la demande divisionnaire (règle 68(4) CBE).

(54) **HERBICIDE COMPOSITION**

(57)      La présente invention est relative à une composition herbicide comportant comportant un premier composé appartenant à la famille des aryloxyphénoxypropionates et un deuxième composé appartenant a la famille des cyclohexanediones, ladite composition étant caractérisée en ce que le premier composé et le second composé sont présents dans ladite composition selon un ratio variant de 1:1,5 à 1:4. La présente invention concerne en outre un procédé de contrôle d'au moins une plante adventice, susceptible de se déveloper dans un champ de culture d'une plante à cultiver, avec ladite composition de l'invention. Enfin, l'utilisation de la composition herbicide pour le traitement d'une cutané de dicotylédones, est également revendiquée.

EP 4 136 975 A1

(52) Classification Coopérative des Brevets (CPC):
(Cont.)

C-Sets
**A01N 43/60, A01N 35/10**

**Description**

La présente invention concerne le domaine des compositions herbicides.

L'invention trouvera son application principalement dans le domaine du traitement et de l'élimination de plantes considérées comme étant néfastes pour certaines cultures.

Plus particulièrement, l'invention concerne une composition herbicide comportant principalement deux composés actifs. Le premier de ces composés consiste en un composé appartenant à la famille des aryloxyphénoxypropionates et le second composé appartient à la famille des cyclohexanediones.

Traditionnellement, les herbicides sont définis comme étant des substances actives ou des préparations utilisées pour lutter contre les adventices ou les « mauvaises herbes ».

Dans certaines configurations, des herbicides sélectifs sont utilisés. Ceux-ci permettent avantageusement de favoriser le contrôle des adventices tout en n'empêchant pas la croissance de la plante qui est cultivée.

On entend par « adventice », dans la suite de la description, une plante qui colonise par accident un territoire, sans y avoir été volontairement semée, par exemple une espèce végétale indésirable, présente dans un champ de culture d'une autre espèce végétale.

La présence d'adventices dans une culture est plus ou moins nocive à cette dernière, à cause notamment des effets de compétition avec la plante cultivée, par exemple vis-à-vis de l'eau, de la lumière, ou encore des éléments minéraux présents dans le sol.

Une plante adventice peut être une plante non cultivée qui s'installe dans un champ d'une plante volontairement cultivée par un agriculteur, ou encore une repousse d'une culture précédente, comme par exemple une repousse de céréale dans une culture de colza.

Une plante adventice peut consister en une plante annuelle, qui ne vit que le temps d'une saison, ou une plante vivace, c'est-à-dire qui vit plus d'un cycle annuel.

De nombreuses compositions herbicides, destinées à traiter les plantes adventices, sont connues dans l'état de la technique.

Ces compositions incorporent, en général, au moins un principe actif, traditionnellement constitué par une molécule chimique, et présentant des propriétés herbicides à l'encontre d'au moins une plante adventice.

Le document de brevet WO 2004/080171 décrit des exemples de telles compositions herbicides.

Ainsi, l'on connait, dans l'état de la technique, des compositions herbicides comportant un composant appartenant à la famille des aryloxyphénoxypropionates, également appelés FOPs, en tant que principe actif.

Des compositions herbicides dans lesquelles le principe actif est constitué par une molécule chimique appartenant à la famille des cyclohexanediones sont également connues.

Cependant, l'utilisation de telles compositions herbicides a entrainé l'apparition de plantes adventices résistantes à ce type de composant.

On connait aussi, dans l'art antérieur, une composition herbicide qui incorpore, d'une part, un aryloxyphénoxypropionate, le quizalofop-p-éthyle et, d'autre part, une cyclohexanedione, la cléthodime.

Plus particulièrement, dans cette composition, le quizalofop-p-éthyle et la cléthodime sont introduits dans des proportions équivalentes. Ainsi, ladite composition comporte 10,5% en poids de quizalofop-p-éthyle et 10,5% en poids de cléthodime, chacun de ces composés étant présent à une concentration de 100g/L. En d'autres termes, le ratio entre le quizalofop-p-éthyle et la cléthodime est de 1:1, ce qui signifie que les deux constituants actifs de la composition sont présents en concentrations équivalentes.

Cependant, il a été mis en évidence, par la demanderesse, qu'un tel ratio ne permettait pas d'obtenir des propriétés optimales en termes d'efficacité et de spectre d'action.

On connait encore, dans l'état de la technique, le document de brevet US 5 629 262 qui évoque une méthode de contrôle des graminées dans les cultures, dans laquelle on applique deux inhibiteurs de l'acétyle coA carboxylase. Ces inhibiteurs peuvent être des produits appartenant à la famille des cyclohexanediones, tels que la sethoxydime, la cléthodime ou la caloxydime.

Il est décrit certaines quantités d'application de ces produits sur les cultures, notamment de 0,0125 à 0,08 lbs.ai/acre de cléthodime.

Toutefois, la demanderesse a mis en évidence que l'application de deux composés herbicides appartenant à deux familles différentes, à un ratio particulier et très spécifique, permettait une amélioration substantielle du traitement des plantes adventices.

Ainsi, l'invention offre la possibilité de pallier les divers inconvénients de l'état de la technique en proposant une composition herbicide présentant une efficacité particulièrement intéressante dans le traitement des plantes adventices.

Plus particulièrement, la présente composition herbicide favorise le contrôle de ces adventices par rapport aux compositions connues dans l'état de l'art. De plus, ladite composition présente un large spectre d'efficacité, et, de ce fait, permet de traiter et de contrôler efficacement de nombreux végétaux indésirables, tout en n'empêchant pas la culture des plantes que l'on souhaite effectivement voir se développer.

A cet effet, la présente invention est relative à une composition herbicide comportant au moins un premier composé appartenant à la famille des aryloxyphénoxypropionates et au moins un deuxième composé appartenant à la famille des cyclohexanediones, ladite composition étant caractérisée en ce que le premier composé et le second composé sont présents dans ladite composition selon un ratio variant de 1:1,5 à 1:4, ou de 1:1,5 à 1:3, ou de 1:1,5 à 1:2,5 ou de 1:1,75 à 1:2,25, ou de 1:1,8 à 1:2,2.

Cela signifie que la quantité dudit deuxième composé dans la composition est 1,5 à 4 fois, ou 1,5 à 3 fois, ou 1,5 à 2,5 fois, ou 1,75 à 2,25 fois, ou de 1,8 à 2,2 fois plus importante que la quantité dudit premier composé.

En outre, dans la composition selon l'invention, la proportion en premier composé est de 31,2 à 35,7%, et la proportion en deuxième composé dans ladite composition est de 64,3 à 68,8%.

Il a en effet été démontré par la demanderesse que de tels ratios entre le premier composé et le deuxième composé permettaient une augmentation de l'efficacité de la composition herbicide dans le contrôle de végétaux adventices, considérés comme des mauvaises herbes, dans les champs de culture.

De manière avantageuse, le ratio entre le premier composé appartenant à la famille des aryloxyphénoxypropionates et le deuxième composé appartenant à la famille des cyclohexanediones est de l'ordre de 1:2.

Cela signifie que la quantité dudit deuxième composé, une cyclohexanedione, dans la composition selon l'invention est deux fois plus importante que la quantité dudit premier composé, un aryloxyphénoxypropionates, la proportion en premier composé dans ladite composition étant de l'ordre de 33,3% et la proportion en deuxième composé dans ladite composition étant de l'ordre de 66,7%.

Ce ratio particulier et spécifique entre les constituants de la composition herbicide permet une action particulièrement optimale de ladite composition lors du traitement d'adventices.

Selon une autre particularité de l'invention, le premier composé appartenant à la famille des aryloxyphénoxypropionates est choisi parmi le quizalofop-p-éthyle, l'haloxyfop, le propaquizafop, le quizalofop-p-tefuryle, le fluazifop-p-butyl et le fenoxaprop-p-éthyl, les isomères de ces composés et les sels de ces composés.

En ce qui concerne à présent le second composé, appartenant à la famille des cyclohexanediones, celui-ci est avantageusement choisi parmi la cléthodime, la cycloxydime et la tépraloxydime, les isomères de ces composés et les sels de ces composés.

Tout particulièrement, le composé appartenant à la famille des aryloxyphénoxypropionates est le quizalofop-p-éthyle et le composé appartenant à la famille des cyclohexanediones est la cléthodime.

Le quizalofop-p-éthyle, couplé à la cléthodime, permet en effet un traitement particulièrement efficace des plantes adventices.

Dans certains modes de réalisation, la concentration massique du premier composé appartenant à la famille des aryloxyphénoxypropionates varie de 65,6 à 75 g/L de composition et dans laquelle la concentration massique du deuxième composé appartenant à la famille des cyclohexanediones varie de 135 à 144,4 g/L de composition.

Dans un mode de réalisation, la concentration massique du premier composé appartenant à la famille des aryloxyphénoxypropionates est de 70 g/L de composition et dans laquelle la concentration massique du deuxième composé appartenant à la famille des cyclohexanediones est de 140 g/L de composition.

L'invention concerne également un procédé de contrôle d'au moins une plante adventice, susceptible de se développer dans un champ de culture d'une plante à cultiver, avec la composition selon l'invention comprenant au moins un premier composé appartenant à la famille des aryloxyphénoxypropionates et au moins un deuxième composé appartenant à la famille des cyclohexanediones.

Dans ce procédé, on dilue de 0,2 à 1,5 L, ou de 0,5 à 0,8 L, de ladite composition dans un volume total de 50 à 300 L d'une solution aqueuse appropriée et on applique ce volume total de ladite composition par hectare du champ.

Le taux d'application dudit premier composé est de 13,1 à 112,5 g/ha de champ tandis que le taux d'application dudit second composé est de 27 à 216,6 g/ha.

De manière toute préférentielle, le taux d'application dudit premier composé est de 32,8 à 60 g/ha de champ, ou de 35 à 56 g/ha, et le taux d'application dudit second composé est de 67,5 à 115,5 g/ha, ou encore de 70 à 112 g/ha.

Avantageusement, préalablement à l'étape d'application de la composition herbicide au niveau dudit champ, on mélange ladite composition avec une huile adjuvante.

L'invention est également relative à une utilisation de la présente composition herbicide pour le contrôle d'au moins une plante adventice, appartenant à la famille des Graminées.

En particulier, ladite composition peut être utilisée pour l'élimination du pâturin annuel (*Poa annua*) et/ou du chiendent commun (*Elytrigia repens*) et/ou des bromes (*Bromus sp.*) et/ou des repousses de céréales, notamment les repousses de blé tendre (*Triticum aestivum*) et/ou d'orge (*Hordeum vulgare*) et/ou des ray-grass (*Lolium sp.*) et/ou du vulpin des champs (*Alopecurus myosuroïdes*) et/ou de la digitaire sanguine (*Digitaria sanguinalis*) et/ou du panic pied de coq (*Echinochloa crus-galli*) et/ou du panic faux-millet (*Panicum miliaceum*) et/ou des sétaires (*Setaria sp.*) et/ou du sorgho d'Alep (*Sorghum halepense*).

De manière intéressante, la composition herbicide est utilisée dans le traitement d'une culture dicotylédone.

Plus particulièrement, cette culture est choisie parmi le colza (*Brassica napus*), la betterave (*Beta vulgaris*), le pois protéagineux (*Pisum sativum*), le tournesol (*Helianthus annuus*), le lin (*Linum usitatissimum*), le soja (*Glycine max*), la luzerne (*Medicago sativa*).

D'autres caractéristiques et avantages de l'invention ressortiront de la description détaillée qui va suivre des modes de réalisation non limitatifs de l'invention.

La présente invention concerne une composition herbicide particulière.

Cette composition comporte, de manière essentielle, au moins deux principes actifs qui vont permettre de lutter contre les plantes adventices indésirables.

Ainsi, la composition incorpore, d'une part, au moins un premier composé appartenant à la famille des aryloxyphénoxypropionates, les composés de cette famille étant également appelé FOPs, ou composés FOP dans la suite de la description.

D'autre part, la composition herbicide selon l'invention comporte au moins, également, un deuxième composé appartenant à la famille des cyclohexanediones, les composés de cette famille étant également appelés DIMs dans la suite de la description.

En d'autres termes, il est tout à fait envisageable que la présente composition comporte une pluralité de composés appartenant à la famille des aryloxyphénoxypropionates, et plusieurs composés appartenant à la famille des cyclohexanediones.

Dans certains cas, la composition comporte un composé appartenant à la famille des aryloxyphénoxypropionates, et un composé appartenant à la famille des cyclohexanediones.

De manière tout à fait avantageuse, la composition comporte uniquement, en tant que substances actives, un composé appartenant à la famille des aryloxyphénoxypropionates, et un composé appartenant à la famille des cyclohexanediones.

De manière particulièrement avantageuse, le ratio entre le composé de la famille des FOPs et le composé de la famille des DIMs peut varier, depuis un ratio de 1:1,5 jusqu'à un ratio de 1:4, ou depuis un ratio de 1:1,8 jusqu'à un ratio de 1:2,2.

En d'autres termes, dans la composition selon l'invention, le composé de la famille des DIMs est présent dans une quantité plus importante que le composé appartenant à la famille des FOPs.

On entend par « quantité », dans la présente description, la masse d'un composé pur, en gramme (g), présent dans la composition herbicide de l'invention. Il s'agit donc de la masse, en g, de composé DIM et de composé FOP.

Ainsi, un composé de la famille des DIMs peut être présent dans une quantité 1,5 fois supérieure à la quantité de composé FOP au sein de la composition herbicide, lorsque le ratio entre le composé FOP et le composé DIM est de 1:1,5. En conséquent, les proportions en substances actives de la composition peuvent avantageusement être de 40% en masse de composé FOP et 60% en masse de composé DIM, ou de 35,7% en masse de composé FOP et 64,3% en masse de composé DIM dans certains modes de réalisation.

En outre, il a été évoqué que la quantité de composé DIM peut aller jusqu'à 2,2 fois ou jusqu'à 4 fois la quantité de composé FOP. Dans ce cas, le ratio entre le composé FOP et le composé DIM est de 1:2,2 ou 1:4 et la composition comporte, en proportion de substances actives, 31,2% en masse de composé FOP et 68,8% en masse de composé DIM or 20% en masse de composé FOP et 80% en masse de composé DIM.

Dans certains modes de réalisation, le ratio entre le composé appartenant à la famille des aryloxyphénoxypropionates et le composé appartenant à la famille des cyclohexanediones est de l'ordre de 1:2, ou encore égal à 1:2.

Dans ce cas de figure particulièrement avantageux, la quantité de composé DIM dans la composition herbicide est 2 fois supérieure à la quantité de composé aryloxyphénoxypropionates.

En d'autres termes, la composition herbicide de l'invention peut comporter, en proportion de substances actives, de l'ordre de 33,3% en masse de composé FOP d'une part, et de l'ordre de 66,7% en masse de composé DIM d'autre part.

Dans certains modes de réalisation, la concentration massique de composé DIM au sein de ladite composition est de 140 g/L de cette dernière. Le composé appartenant à la famille des aryloxyphénoxypropionates est alors présent dans une concentration massique de 70 g/L de la composition.

On entend par « concentration massique », la masse (en g) d'un composé, soit le composé FOP soit le composé DIM, dans volume égal à 1 L de composition herbicide.

Un litre de composition herbicide selon l'invention comporte donc, d'une part, une quantité de composé FOP pur de 70g et, d'autre part, une quantité de composé DIM pur de 140g, ce qui correspond à un ratio entre ces composés de 1:2.

Toutefois, un tel exemple n'est pas limitatif de l'invention, et la concentration massique en composé DIM peut varier de 50 à 840 g/L ou de 135 à 144,4 g/L. Pour ce qui est de la concentration massique de aryloxyphénoxypropionates, celle-ci peut alors avantageusement varier de 35 à 210g/L ou de 65,6 à 75 g/L. Le ratio entre le composé aryloxyphénoxypropionate et le composé DIM doit, quant à lui être de 1:1,5 à 1:4 ou de l'ordre de 1:1,8 à 1:2,2, ce ratio étant égal à environ 1:2 dans certains modes de réalisation, comme déjà évoqué ci-dessus.

Il a en effet été mis en évidence, par la demanderesse, qu'une telle modification par rapport aux compositions herbicides de l'art antérieur, dans lesquels les deux composés actifs sont présents dans des concentrations et des proportions équivalentes au sein de la composition, permettait une amélioration des propriétés herbicides.

Les résultats, illustrant l'amélioration de l'activité herbicide de la présente composition, par rapport aux compositions existantes, sont retrouvés dans les exemples 1 et 2 détaillés ci-dessous.

Pour en revenir à présent au composé appartenant à la famille des aryloxyphénoxypropionates, ou FOPs, compris dans la composition selon l'invention, celui-ci peut être avantageusement choisi parmi les molécules suivantes : le quizalofop-p-éthyle, l'haloxyfop, le propaquizafop, le quizalofop-p-tefuryle, le fluazifop-p-butyle et le fenoxaprop-p-éthyle.

Ce composé peut également être choisi parmi les isomères ou les sels des composés quizalofop-p-éthyle, haloxyfop, propaquizafop, quizalofop-p-tefuryle, fluazifop-p-butyle et fenoxaprop-p-éthyle.

La composition herbicide selon l'invention peut également incorporer plusieurs composés appartenant à la famille des aryloxyphénoxypropionates, tels que cités ci-dessus, par exemple deux de ces composés voir plus. Dans ce cas, le ratio entre les composés appartenant à la famille des aryloxyphénoxypropionates et le composé DIM varie de 1:1,5 à 1:4, ou de 1:1,8 à 1:2,2 dans certains cas.

L'haloxyfop consiste en une substance chimique herbicide de formule brute $C_{15}H_{11}ClF_3NO_4$. Il est dénommé également haloxyfop-P ou encore haloxyfop-R.

Le propaquizafop présente la formule brute $C_{22}H_{22}ClN_3O_5$.

En ce qui concerne le composé quizalofop-p-tefuryle, celui-ci a comme formule $C_{22}H_{21}ClN_2O_5$.

Le fluazifop-p-butyle a comme formule brute $C_{19}H_{20}F_3NO_4$ et est généralement hydrolysé en fluazifop-p une fois absorbé par la plante à traiter. Il existe également le fluazifop-butyle, qui lui est hydrolysé en fluazifop une fois absorbé dans la plante.

Le fenoxaprop-p-éthyle a comme formule brute $C_{18}H_{16}ClNO_5$.

Ces composés sont actifs sur les plantes annuelles et vivaces.

Dans un exemple de réalisation tout particulier, le composé retenu dans la composition herbicide consiste en du quizalofop-p-éthyle.

Ce composé chimique correspond à une substance phytosanitaire présentant une formule brute $C_{19}H_{17}ClN_2O_4$.

Le quizalofop-p-éthyle est absorbé par la plante sur laquelle est appliquée la composition selon l'invention, généralement par pulvérisation. Le composé chimique est ensuite acheminé, via la sève, jusqu'aux zones de croissance de ladite plante, notamment des feuilles, de la tige ou encore des racines. Au niveau de ces zones, le composé perturbe leur développement, entrainant, en conséquence, l'arrêt de la croissance et de la propagation de cette plante.

Plus généralement, tous les composés appartenant à la famille chimique des FOPs agissent, notamment au niveau des zones de croissance, en inhibant les voies de synthèses des lipides des plantes à éliminer, et plus particulièrement l'enzyme acétyl-coenzyme A carboxylase qui intervient dans ces voies.

En ce qui concerne le composé appartenant à la famille des cyclohexanediones, celui-ci est avantageusement choisi parmi la cléthodime, la cycloxydime et la tépraloxydime.

Ce composé peut également être choisi parmi les isomères ou les sels des composés cléthodime, cycloxydime et tépraloxydime.

Tout particulièrement, ce composé consiste en de la cléthodime.

Ainsi, dans un mode de réalisation, la composition herbicide selon l'invention comporte du quizalofop-p-éthyle et de la cléthodime dans des ratios, pourcentages et concentrations tels que définis ci-dessus.

La cléthodime est un composé chimique appartenant à la famille des cyclohexanediones et correspond à une substance active présentant un effet herbicide. La formule brute de la cléthodime est $C_{17}H_{26}ClNO_3S$.

La cléthodime peut être la seule substance active dans certaines compositions herbicides connues dans l'état de l'art. Toutefois, certaines cultures, comme par exemple les cultures de colza ou de pois peuvent être sensibles à cette substance. Ainsi, la plante que l'on désire effectivement cultiver est susceptible de subir quelques dommages lors du traitement de la culture, ce qui n'est pas souhaitable.

Le mode d'action de la cléthodime repose sur l'inhibition de la synthèse des acides gras chez les végétaux. En effet, les acides gras des végétaux sont essentiels à l'intégrité des membranes cellulaires, ainsi qu'à la croissance des nouvelles plantes.

Plus particulièrement, la cléthodime agit en inhibant l'acétyl-coenzyme A carboxylase (ou ACCase), qui correspond à la deuxième enzyme intervenant dans la voie de synthèse, d'une part, des acides gras et, d'autre part, des flavonoïdes.

D'autres mélanges de FOP et de DIM sont particulièrement intéressants. Il s'agit en particulier des mélanges suivants :

- haloxyfop et cléthodime ;
- propaquizafop et cléthodime ;
- fenoxaprop et cléthodime ;

- fluazifop-p-butyle et cléthodime ;
- quizalofop-p-terfuryle et cléthodime ;
- quizalofop-p-éthyle et cycloxydime ; et
- quizalofop-p-éthyle et tépraloxydime.

La composition herbicide selon l'invention permet de proposer un produit présentant une efficacité élevée et très complète sur l'ensemble des espèces adventices considérées comme étant des mauvaises herbes nuisibles aux cultures. Par ailleurs, ladite composition permet un traitement efficace aussi bien des adventices annuelles que des adventices vivaces.

De plus, alors que certaines espèces végétales résistantes aux composés de la famille des inhibiteurs de l'ACCase sont apparues en Europe, la combinaison des deux composés, dans le ratio particulier de la présente invention, permet avantageusement de maintenir l'efficacité herbicide.

Ainsi, la composition herbicide qui a été développée, consiste en un outil permettant le contrôle d'espèces végétales adventices résistantes et qu'il est difficile, voire impossible d'éradiquer. Ladite composition peut également permettre de lutter contre l'apparition de résistances.

A cet effet, la présente invention concerne également un procédé de contrôle d'au moins une plante adventice, celle-ci étant indifféremment annuelle ou vivace, susceptible de se propager dans un champ de culture d'une autre espèce végétale, qui est, elle, activement cultivée.

Le procédé de contrôle de ladite plante adventice se fait au moyen de la composition herbicide selon l'invention et dont la formulation a été détaillée ci-dessus, laquelle composition est appliquée au niveau du champ de culture.

De manière avantageuse, la composition utilisée dans le procédé de contrôle de la plante adventice comprend du quizalofop-p-éthyle et de la cléthodime dans un ratio variant de 1:1,5 à 1:4, ou de 1:1,8 à 1:2,2 ; ce ratio étant égal à 1:2 dans certains modes de réalisation.

Selon certains modes de réalisation, on applique ladite composition par pulvérisation de celle-ci, au niveau du champ sur lequel la croissance et la propagation des adventices doivent être contrôlées.

De manière avantageuse, ladite composition est appliquée en post-émergence au niveau des adventices à traiter, c'est-à-dire que la composition est appliquée entre le moment où le jeune plant émerge du sol et le moment où il atteint sa maturité.

Dans certains modes de réalisation, la composition herbicide selon l'invention est appliquée dans un volume de 0,2 à 1,5 L par hectare (ha) de champ à traiter. Dans certains modes de réalisation, ce volume à appliquer est compris entre 0,5 et 0,8 L/ha.

En d'autres termes, le taux d'application du premier composé appartenant à la famille des FOPs, notamment le quizalofop-p-éthyle, va de 8,5 à 315 g/ha de champ, ou de 13,1 à 112,5 g/ha de champ, en fonction de la concentration massique de composé FOP qui a été rappelée précédemment.

Dans certains cas, ce taux d'application du composé appartenant à la famille des FOPs va de 17 à 170 g/ha, ou de 32 à 60 g/ha Selon d'autres possibilités, le taux d'application de composé FOP va de 35 à 56 g/ha.

Pour ce qui est du taux d'application du composé appartenant à la famille des DIMs, et consistant avantageusement en de la cléthodime, celui-ci va de 13 à 1260 g/ha de champ, ou de 27 à 216,6 g/ha, ou selon certaines possibilités de 26 à 670 g/ha, ou de 67,5 à 115,5 g/ha, en fonction de la concentration massique de cléthodime susmentionnée. Selon un mode particulier, ce taux va de 70 à 112 g/ha.

Il est également envisageable que le composé aryloxyphénoxypropionate soit appliqué pour des valeurs allant de 10 à 30 g/ha de champ et le composé cyclohexanedione soit appliqué pour des valeurs allant de 20 à 60 g/ha.

Le composé aryloxyphénoxypropionate peut également être utilisé à un taux de 14 g/ha et le composé cyclohexanedione à un taux de 28 g/ha.

Le composé aryloxyphénoxypropionate peut également être utilisé à un taux de 24,5 g/ha et le composé cyclohexanedione à un taux de 49 g/ha.

L'invention concerne également une utilisation de la composition herbicide dans laquelle le composé aryloxyphénoxypropionate est appliqué à un taux compris entre 10 et 30 g/ha et dans laquelle le composé cyclohexanedione est appliqué à un taux compris entre 20 et 60g/ha.

Selon une possibilité, l'utilisation de la composition herbicide s'effectue avec le composé aryloxyphénoxypropionate appliqué à un taux de 14 g/ha et le composé cyclohexanedione appliqué à un taux compris de 28 g/ha.

Enfin, selon encore une autre possibilité, l'invention concerne une utilisation de la composition herbicide de sorte que le composé aryloxyphénoxypropionate soit appliqué à un taux de 24,5 g/ha et le composé cyclohexanedione soit appliqué à un taux compris de 49 g/ha.

On applique, de manière avantageuse, un volume total d'au moins 50 L/ha de champ, allant dans certains cas de 150 à 300 L/ha et dans certains cas de 200 à 250 L/ha de champ.

En conséquence, préalablement à l'étape d'application, la composition herbicide est diluée dans un volume total tel qu'indiqué dans le paragraphe précédent.

Avantageusement, ladite composition herbicide est diluée dans une solution aqueuse, comprenant au moins de l'eau, et pouvant consister par exemple en une émulsion aqueuse.

La solution aqueuse peut comporter d'autres constituants, comme par exemple un composé stabilisant et/ou un surfactant, etc.

Le volume total appliqué à la culture peut également comprendre, outre la composition herbicide et la solution aqueuse, d'autres composants.

En effet, avantageusement, avant l'étape application de la composition herbicide sur la culture, la composition peut être mélangée avec au moins une huile adjuvante, qui est susceptible d'augmenter l'efficacité de la composition herbicide.

Dans un exemple de réalisation, on mélange un volume allant de 0,2 à 1,5 L de composition, ou de 0,5 à 0,8 L de composition avec un volume de l'ordre de 1,0 L d'huile adjuvante pour un hectare de champ, avant de compléter avec la solution aqueuse, pour arriver à un volume total compris entre 50 et 300 L/ha dudit champ.

Plus précisément, l'association d'une telle huile adjuvante à ladite composition permettrait de maintenir cette dernière à la surface de la feuille du végétal à traiter, entrainant ainsi une pénétration d'une quantité plus importante de substance active herbicide dans le système circulatoire dudit végétal.

L'huile adjuvante qui peut être mélangée à la composition herbicide de l'invention peut être de tout type.

En particulier, il peut s'agir soit d'une huile d'origine végétale, ou d'une huile dérivée du pétrole ou encore d'une huile animale.

En ce qui concerne une huile adjuvante végétale, celle-ci peut préférentiellement consister en une huile de colza estérifiée commercialisée sous le nom commercial Actirob®B 1.0. Actirob®B 1.0 est ci-après dénommé « Actirob ».

Lorsque l'on utilise une huile dérivée du pétrole, celle-ci peut consister, par exemple, en une huile minérale paraffinique.

La composition herbicide selon la présente invention est particulièrement efficace pour le contrôle et l'élimination des plantes adventices appartenant à la famille des Graminées (ou Gramineae). Les plantes de cette famille peuvent également être dénommées Poacées (ou Poaceae).

Les Graminées sont des plantes herbacées, annuelles ou vivaces, et cette famille regroupe un grand nombre d'espèces.

En particulier, certaines céréales cultivées, comme le maïs, le blé, l'orge, etc. appartiennent à la famille des Graminées. Les céréales peuvent, en effet, s'avérer être indésirables dans certains champs de culture, notamment lorsqu'un champ a servi, dans un premier temps, à la culture d'une espèce de céréales, et qu'il est ensuite destiné à recevoir une autre culture.

Des repousses non souhaitées de céréales peuvent alors être susceptibles de se développer et, de ce fait, d'entrer en compétition avec la variété cultivée.

Plus particulièrement, la composition herbicide selon l'invention peut être utilisée dans l'optique d'éliminer au moins une plante adventice choisie parmi les adventices suivantes : le pâturin annuel (*Poa annua*), le chiendent commun (*Elytrigia repens*), les bromes (*Bromus sp.*), les repousses de céréales, et notamment repousses de blé tendre (*Triticum aestivum*) et/ou d'orge (*Hordeum vulgare*), les ray-grass (*Lolium sp.*), le vulpin des champs (*Alopecurus myosuroïdes*), la digitaire sanguine (*Digitaria sanguinalis*), le panic pied de coq (*Echinochloa crus-galli*), le panic faux-millet (*Panicum miliaceum*), les sétaires (*Setaria sp.*), le sorgho d'Alep (*Sorghum halepense*).

Toutefois, il est également envisageable que la composition soit utilisée pour contrôler tout autre type d'adventices appartenant notamment à la famille des Graminées.

Ainsi, la composition herbicide selon l'invention permet de traiter une large gamme d'espèces végétales indésirables et qui sont susceptibles se développer et de se propager dans une culture d'une plante donnée, freinant ainsi la croissance de cette dernière.

En effet, la composition herbicide selon l'invention peut être utilisée pour le traitement d'une large variété de plantes qui sont cultivées volontairement.

Ainsi, ladite composition est avantageusement utilisée afin de traiter des champs de cultures dicotylédones.

Plus particulièrement la composition peut permettre de contrôler le développement d'au moins une plante adventice dans une culture de dicotylédone choisie parmi le colza (*Brassica napus*), la betterave (*Beta vulgaris*), le pois protéagineux (*Pisum sativum*), le tournesol (*Helianthus annuus*), le lin (*Linum usitatissimum*), le soja (*Glycine max*), la luzerne (*Medicago sativa*).

Toutefois, il est possible de traiter encore d'autres types de cultures au moyen de la présente composition.

Sauf mention contraire, tous les termes scientifiques et techniques utilisés ci-après ont la même signification que celle communément admise par l'homme de l'art dans le domaine duquel appartient la présente invention.

Bien que des méthodes et des matériels similaires ou équivalents à ceux décrits ci-après puissent être utilisés dans la pratique ou les essais impliquant l'invention, des méthodes et matériels appropriés sont décrits dans la présente description.

Toutes les demandes, publications, brevets et autres références cités ici sont incorporées dans leur intégralité par renvoi à la présente. En cas de conflit, la présente demande, incluant les définitions, fait foi.

Dans la présente demande, les formes singulières "un", "une", "le", "la" incluent les références plurielles à moins que le contexte indique clairement le contraire.

Dans la présente demande, les valeurs numériques sont souvent présentées sous forme de plages de valeurs tout au long de ce document. Les plages de valeurs sont utilisées principalement pour des raisons de commodité et de concision et ne doivent pas être interprétées comme étant une limitation stricte de la portée de l'invention.

Par conséquent, l'utilisation d'une plage de valeurs inclut expressément tous les sous-domaines possibles et toutes les valeurs numériques individuelles incluses dans cette plage, et toutes les valeurs numériques ou plages numériques comportant des nombres entiers compris dans ces plages ou sous-domaines, ainsi que les fractions desdites valeurs numériques ou desdits nombres entiers à l'intérieur de ces plages, à moins que le contexte n'indique expressément le contraire. Cela s'applique dans tous les cas à l'intégralité de la plage de valeurs et dans tous les contextes tout au long de la présente demande. Ainsi, par exemple, une plage de valeurs de 40 à 60% inclut 41 à 59%,42-58%, 43-57%, 41-58%, 41-57%, 41-56%, 41-55%, 41-54%, 41-53%, et ainsi de suite.

Dans la présente demande, une série de ratios est utilisée principalement pour des raisons de commodité et de concision et ne doivent pas être interprétées comme étant une limitation stricte de la portée de l'invention.

L'utilisation de séries de ratios inclut les combinaisons du ratio supérieur et du ratio inférieur pour fournir des ratios sous la forme d'une plage de valeurs. Cette construction s'applique dans tous les cas à l'intégralité de la plage de valeurs des ratios et dans tous les contextes tout au long de la présente demande.

La présente invention est généralement divulguée ci-après en utilisant un langage affirmatif pour décrire les nombreux modes de réalisation. L'invention inclut également spécifiquement des modes de réalisation dans lesquels un objet particulier est exclu, en totalité ou en partie, par exemple des substances ou matériels, étapes de méthodes et conditions, protocoles, procédures, essais ou analyses.

Ainsi, bien que l'invention ne soit généralement pas exprimée ci-après en des termes formalisant ce que l'invention n'inclut pas, des aspects qui ne sont pas expressément inclus dans l'invention doivent cependant être considérés comme y étant divulgués.

Les exemples ci-dessous permettent d'illustrer l'efficacité de l'action de ladite composition, à l'encontre de certaines espèces adventices, notamment le ray-grass (*Lolium multiflorum*) et le vulpin des champs (*Alopecurus myosuroïdes*), dans des cultures d'espèces variées, comme le colza (*Brassica napus*) ou encore la betterave (*Beta vulgaris*).

Exemple 1 : Test de l'efficacité de la composition herbicide sur le ray-grass

Des essais ont été conduits pour montrer l'efficacité de la composition herbicide selon l'invention sur une plante adventice appelée ray-grass. Cette plante, également appelée ivraie multiflore ou ray-grass d'Italie (*Lolium multiflorum*) est traditionnellement considérée comme une mauvaise herbe.

La composition a été testée sur différentes parcelles de colza (OSR pour Oilseed rape, *Brassica napus*).

Les résultats des tests sont récapitulés dans le tableau 1 ci-dessous.

**Tableau 1 :**

| | | | | Essai | ALS11H56-02 | ALS11H56-04 | ALS12H48-03 |
|---|---|---|---|---|---|---|---|
| | | | | Culture | OSR | OSR | OSR |
| | | | | Interval Eval. - Applic. | 53 DAA | 53 DAA | 58 DAA |
| | Mean | Min | Max | | | | |
| ALSNC10HCLQ01 0,8 + Actirob | **92,7** | **88** | **98** | | **88** | **98** | **92** |
| Cléthodime 100g/L + Quizalofop-P-éthyle 100 g/L (une formulation 1:1 appliquée à 0,4-0,5 L/ha) + Actirob | 83,3 | 75 | 95 | | 80 | 95 | 75 |
| quizalofop-p-éthyle (1,2 litre per hectare) (+ Actirob) | 56,7 | 26 | 76 | | 26 | 76 | 68 |
| 1.5 fluazifop-p-butyle (1,5 litre per hectare) | 38,3 | 3 | 66 | | 3 | 66 | 46 |

Les résultats correspondant aux dommages causés par les différents composés qui ont été testés sont exprimés en pourcentage de plantes adventices éliminées, de 0 à 100% par rapport à une parcelle contrôle au niveau duquel aucun traitement herbicide n'a été appliqué. La valeur 0 correspond à aucun dommage observé sur les plantes adventices tandis que la valeur 100 correspond à une élimination de l'intégralité des plantes adventices.

La composition identifiée ALSNC10HCLQ01 0,8 correspond à la composition herbicide selon l'invention. Cette composition ALSNC10HCLQ01 0,8 comprend du quizalofop-p-éthyle et de la cléthodime, ces deux composés étant présents dans la composition dans un ratio de 1:2.

Plus précisément, ladite composition herbicide ALSNC10HCLQ01 0,8 présente une concentration massique de 70g/L en quizalofop-p-éthyle et une concentration massique de 140 g/L en cléthodime.

En outre, un volume de 0,8 L de ladite composition a été appliqué par hectare de la parcelle traitée.

Le quizalofop-p-éthyle et le fluazifop-p-butyle appartiennent à la famille des aryloxyphénoxypropionates. Un volume de 1,2 L de quizalofop-p-éthyle par hectare et un volume de 1,5 L de fluazifop-p-butyle par hectare ont respectivement été appliqués.

Les formulations comprenant du quizalofop-p-éthyle et de la cléthodime dans un ratio 1:1 sont communément dénommées Q+C 1:1, dans les exemples.

Dans ces formulations, le quizalofop-p-éthyle et la cléthodime sont incorporés dans des proportions égales. Autrement dit, le ratio entre le quizalofop-p-éthyle et la cléthodime est de 1:1.

Les compositions ALSNC10HCLQ01 0,8, Q+C 1:1 (0,4 - 0,5 litre par hectare) et quizalofop-p-éthyle (1,2 litre par hectare) qui ont été testées ont été diluées, préalablement à leur application, dans 1 L d'une huile adjuvante (Actirob).

Différents essais ont été conduits dans différents champs où est cultivé du colza (OSR). L'efficacité des différents produits et de la composition herbicide selon l'invention a été évaluée à différents intervalles de temps suivant l'application desdits produits sur la culture en question (DAA pour « days after application »). Par exemple, l'efficacité des produits a été mesurée 53 et 58 jours après leur application sur le champ de colza. Ces intervalles après application sont nécessaires et suffisants pour permettre de juger de l'efficacité finale des produits testés.

Les résultats des tests montrent clairement, d'une part, que la composition herbicide selon la présente invention présente une efficacité améliorée par rapport à des composés herbicides utilisés seuls, comme le quizalofop-p-éthyle, le fluazifop-p-butyle.

D'autre part, la composition herbicide selon l'invention permet également de contrôler de manière plus efficace l'adventice testée, à savoir le ray-grass, que le Q+C 1 :1.

En effet, la composition herbicide présente une efficacité moyenne de 92,7% tandis que le Q+C 1:1 présente une efficacité moyenne de l'ordre de 83,3%.

En outre, pour chacun des essais conduits, la composition selon l'invention a montré une efficacité améliorée par rapport aux différents autres produits qui ont été testés en parallèle.

Par conséquent, la modification du ratio entre les deux molécules actives dans la composition herbicide de l'invention permet bien une amélioration de l'efficacité de ladite composition dans le traitement du ray-grass.

Exemple 2 : Test de l'efficacité de la composition herbicide sur le vulpin

Des tests ont également été conduits pour montrer l'efficacité de la composition herbicide selon l'invention sur une seconde plante adventice appelée vulpin. Cette plante annuelle est traditionnellement considérée comme une mauvaise herbe dans les champs cultivés.

Les cultures sur lesquelles la composition a été testée consistent soit en des cultures de betterave, (S beet pour sugar beet, *Beta vulgaris*), soit en des cultures de colza (OSR pour oilseed rape, *Brassica napus.*

Les résultats des tests sont récapitulés dans le tableau 2 ci-dessous.

**Tableau 2 :**

| Essai n° | | | ALS11H42-02 | ALS11H56-01 | ALS12H48-05 |
|---|---|---|---|---|---|
| Culture | | | S beet | OSR | OSR |
| Interval Eval. – Applic. | | | 46 DAA | 50 DAA | 44 DAA |
| Mean | Min | Max | | | |
| ALSNC10HCLQ01 0,8 + Actirob | | | | | |
| **87** | **72** | **95** | **72** | **95** | **94** |
| Cléthodime 100g/L + Quizalofop-P-éthyle 100 g/L ((une formulation 1:1 appliquée à 0,4-0,5 L/ha)+ Actirob | | | | | |
| 73,7 | 45 | 89 | 45 | 89 | 87 |
| quizalofop-p-éthyle (1,0 à 1,2 L/ha) (+ Actirob) | | | | | |
| 47,7 | 30 | 63 | 30 | 63 | 50 |
| fluazifop-p-butyle (1,5 L/ha) | | | | | |
| 64,0 | 52 | 76 | – | 76 | 52 |

Les composés dont l'efficacité a été évaluée sont les mêmes que dans l'exemple 1.

La composition herbicide selon l'invention, identifiée dans le tableau ci-dessus ALSNC10HCLQ01 présente la même formulation en cléthodime et en quizalofop-p-éthyle que la composition qui a été testée dans l'exemple 1.

De la même manière que dans l'exemple 1, différents essais ont été conduits dans différents champs, dans chacun desquels est cultivée une plante d'intérêt.

Dans cet exemple, des tests ont été menés dans deux parcelles de colza, d'une part, et dans une parcelle de betterave d'autre part.

L'efficacité des différents produits et de la composition herbicide selon l'invention a été évaluée à différents intervalles suivant l'application (DAA) desdits produits sur la culture en question.

Par exemple, l'efficacité des produits a été mesurée 44, 46 et 50 jours après leur application.

Comme pour l'exemple 1, les résultats des tests qui ont été conduits sur le vulpin des champs illustrent bien que la composition selon l'invention permet un contrôle plus efficace de cette plante adventice de cultures diverses, par rapport à d'autres composés qui sont connus de l'état de la technique.

En effet, pour tous les tests dont les résultats sont repris dans le tableau 2, la présente composition montre une meilleure élimination des adventices, que ce soit dans les cultures de colza ou de betteraves.

Tableau 3

| Nom scientifique graminée | | | | *Triticum aestivum* | *Hordeum vulgare* | *Lolium multiflorum* | *Alopecurus myosuroides* | *Bromus sterilis* |
|---|---|---|---|---|---|---|---|---|
| Nom commun graminée | | | | Blé d'hiver | Orge d'hiver | Ivraie multiflore | Vulpin des champs | Brome stérile |
| Echelle stade | | | | BBCH | BBCH | BBCH | BBCH | BBCH |
| Stade majoritaire | | | | 24 | 24 | 24 | 24 | 24 |
| Intervalle traitement notation (en jours) | | | | 54 | 54 | 54 | 54 | 54 |
| | | Quantité ingrédient actif g/ha | | | | | | |
| 1 | Témoin non traité | Clethodim | Quizalofop-P-ethyl | 38 | 38 | 38 | 38 | 38 |
| 2 | (Cléthodime 140g/L+Quizalofop- P-éthyle 70g/L) | 0,2 l/ha | 28 | 14 | **97,5** | **98,8** | 100 | 97 | 100 |
| 3 | (Cléthodime 140g/L+Quizalofop-P-éthyle 70g/L) | 0,35 l/ha | 49 | 24,5 | 100 | **100** | 100 | **100** | 100 |
| 4 | (Cléthodime 140g/L+Quizalofop- P-éthyle 70g/L) | 0,5 l/ha | 70 | 35 | 100 | 100 | 100 | 100 | 100 |
| 5 | (Cléthodime 240g/L) | 0,11 l/ha | 26,4 | - | 60 | 50 | 85 | 90 | 70 |
| 6 | (Cléthodime 240g/L) | 0,2 l/ha | 48 | - | 82,5 | 85 | 100 | 95 | 96,5 |
| 7 | (Cléthodime 240g/L) | 0,29 l/ha | 69,6 | - | 100 | 100 | 100 | 100 | 100 |
| 8 | (Quizalofop-P-éthyle 120g/L) | 0,11 l/ha | - | 13,2 | 90 | 50 | 60 | 60 | 87,5 |
| 9 | (Quizalofop-P-éthyle 120g/L) | 0,2 l/ha | - | 24 | 100 | 96,5 | 95 | 75 | 100 |
| 10 | (Quizalofop-P-éthyle 120g/L) | 0,29 l/ha | - | 34,8 | 100 | 98 | 100 | 92,5 | 100 |
| 11 | (Cléthodime 100g/L + Quizalofop-P-éthyle 100 g/L) | 0,4 l/ha | 40 | 40 | 100 | 100 | 100 | 92,5 | 100 |

(suite)

| Nom scientifique graminée | | | | *Triticum aestivum* | *Hordeum vulgare* | *Lolium multiflorum* | *Alopecurus myosuroides* | *Bromus sterilis* |
|---|---|---|---|---|---|---|---|---|
| Nom commun graminée | | | | Blé d'hiver | Orge d'hiver | Ivraie multiflore | Vulpin des champs | Brome stérile |
| | Synergie calculée par equation de Colby | | | | | | | |
| | Entre traitements 5 and 8 | | | 96 | 75 | 94 | 96 | 96,25 |
| | Entre traitements 6 and 9 | | | 100 | 99,475 | 100 | 98,75 | 100 |
| | Entre traitements 7 and 10 | | | 100 | 100 | 100 | 100 | 100 |

EP 4 136 975 A1

## Equation de Colby(Eff. A+Eff.B)-(Eff.A * Eff.B)/100

Tous les traitements ont été appliqués avec une huile adjuvante (Actirob à 1,0 1/ha). Les traitements sont effectués au stade 3 feuilles, début tallage (BBCH 13-21)

Résultats : modalités traitées: % efficacité par rapport au témoin; Témoin: niveau d'infestation en nombre de plantes/m$^2$

Les efficacités calculées avec les équations de Colby sont à comparer avec les efficacités observées avec ALSNC10HCLQ01.Les valeurs indiquées en gras avec les formules ALSNC10HCLQ01 indiquent une synergie au sein de cette formulation.

L'abréviation "BBCH" utilisée dans le tableau 3 et ailleurs dans la demande est une référence au code BBCH (Biologische Bundesanstalt, Bundessortenamt und CHemische Industrie) usuellement utilisé dans l'industrie pour identifier les stades de développement phénologiques d'une plante, pour de nombreuses espèces cultivées.

Bien entendu, l'invention n'est pas limitée aux compositions herbicides illustrées et décrites précédemment qui peuvent présenter des variantes et modifications sans pour autant sortir du cadre de l'invention.

La présente demande et invention comprend en outre l'objet des clauses numérotées suivantes:

1. Composition herbicide comportant un premier composé appartenant à la famille des aryloxyphénoxypropionates et un deuxième composé appartenant à la famille des cyclohexanediones, ladite composition étant caractérisée en ce que le premier composé et le second composé sont présents dans ladite composition selon un ratio variant de 1:1,5 à 1:4, c'est-à-dire que la quantité dudit deuxième composé dans la composition est 1,5 à 4 fois plus importante que la quantité dudit premier composé, et en ce que la proportion en premier composé dans ladite composition est comprise entre 20 et 40 %, la proportion en deuxième composé dans ladite composition étant comprise entre 60 et 80%.

2. Composition herbicide selon la clause précédente caractérisée en ce que le premier composé et le second composé sont présents dans ladite composition selon un ratio variant de 1:1,8 à 1:2,2, c'est-à-dire que la quantité dudit deuxième composé dans la composition est 1,8 à 2,2 fois plus importante que la quantité dudit premier composé, et en ce que la proportion en premier composé dans ladite composition est comprise entre 31,2 et 35,7%, la proportion en deuxième composé dans ladite composition étant comprise entre 64,3 et 68,8%.

3. Composition herbicide selon l'une quelconque des clauses précédentes, dans laquelle le ratio entre le premier composé appartenant à la famille des aryloxyphénoxypropionates et le deuxième composé appartenant à la famille des cyclohexanediones est de l'ordre de 1:2, c'est-à-dire que la quantité dudit deuxième composé dans la composition est deux fois plus importante que la quantité dudit premier composé, la proportion en premier composé dans ladite composition étant de l'ordre de 66,7% et la proportion en deuxième composé dans ladite composition étant de l'ordre de 33,3%.

4. Composition herbicide selon l'une quelconque des clauses précédentes, dans laquelle le premier composé appartenant à la famille des aryloxyphénoxypropionates est choisi parmi le quizalofop-p-éthyle, l'haloxyfop, le propaquizafop, le quizalofop-p-tefuryle, le fluazifop-p-butyle, le fenoxaprop-p-éthyle, les isomères de ces composés et les sels de ces composés.

5. Composition herbicide selon l'une quelconque des clauses précédentes, dans laquelle le second composé appartenant à la famille des cyclohexanediones est choisi parmi la cléthodime, la cycloxydime, la tépraloxydime, les isomères de ces composés et les sels de ces composés.

6. Composition herbicide selon l'une quelconque des clauses précédentes dans laquelle le composé appartenant à la famille des aryloxyphénoxypropionates est le quizalofop-p-éthyle et le composé appartenant à la famille des cyclohexanediones est la cléthodime.

7. Composition herbicide selon l'une quelconque des clauses précédentes dans laquelle la concentration massique du premier composé appartenant à la famille des aryloxyphénoxypropionates varie de 65,6 à 75 g/L de composition et dans laquelle la concentration massique du deuxième composé appartenant à la famille des cyclohexanediones varie de 135 à 144,4 g/L de composition.

8. Composition herbicide selon l'une quelconque des clauses précédentes, dans laquelle la concentration massique du premier composé appartenant à la famille des aryloxyphénoxypropionates est de 70 g/L de composition et dans laquelle la concentration massique du deuxième composé appartenant à la famille des cyclohexanediones est de 140 g/L de composition.

9. Procédé de contrôle d'au moins une plante adventice, susceptible de se développer dans un champ de culture d'une plante à cultiver, avec une composition selon l'une quelconque des revendications 1 à 8 comprenant au moins un premier composé appartenant à la famille des aryloxyphénoxypropionates et au moins un deuxième composé appartenant à la famille des cyclohexanediones, dans lequel on dilue entre 0,2 et 1,5 L de ladite composition, ou entre 0,5 et 0,8 L, dans un volume total de 50 à 300 L d'une solution aqueuse appropriée et on applique ce volume total par hectare du champ.

10. Procédé de contrôle d'au moins une plante adventice selon la clause précédente dans lequel le taux d'application dudit premier composé est compris entre 13,1 et 112,5 g/ha de champ, ou entre 32,8 et 60 g/ha de champ, ou encore entre 35 et 56 g/ha, et le taux d'application dudit second composé est compris entre 27 et 216,6 g/ha de champ, ou entre 67,5 et 115,5 g/ha, ou encore entre 70 et 112 g/ha.

11. Procédé de contrôle d'au moins une plante adventice selon l'une des clauses 9 ou 10, dans lequel, préalablement à l'étape d'application, on mélange la composition avec une huile adjuvante.

12. Utilisation de la composition herbicide selon l'une des clauses 1 à 8 pour le contrôle d'au moins une plante adventice, appartenant à la famille des Graminées.

13. Utilisation de la composition herbicide selon la clause précédente pour l'élimination du pâturin annuel (*Poa annua*) et/ou du chiendent commun (*Elytrigia repens*) et/ou des bromes (*Bromus sp.*) et/ou des repousses de céréales, notamment des repousses de blé tendre (*Triticum aestivum*) et/ou d'orge (*Hordeum vulgare*), et/ou des ray-grass (*Lolium sp.*) et/ou du vulpin des champs (*Alopecurus myosuroïdes*) et/ou de la digitaire sanguine (*Digitaria sanguinalis*) et/ou du panic pied de coq (*Echinochloa crus-galli*) et/ou du panic faux-millet (*Panicum miliaceum*) et/ou des sétaires (*Setaria sp.*) et/ou du sorgho d'Alep (*Sorghum halepense*).

14. Utilisation de la composition herbicide selon l'une des clauses 12 ou 13 pour le traitement d'une culture dicotylédone.

15. Utilisation de la composition herbicide selon la clause précédente pour le traitement d'une culture choisie parmi le colza (*Brassica napus*), la betterave (*Beta vulgaris*), le pois protéagineux (*Pisum sativum*), le tournesol (*Helianthus annuus*), le lin (*Linum usitatissimum*), le soja (*Glycine max*), la luzerne *(Medicago sativa).*

16. Utilisation de la composition herbicide selon l'une des clauses 1 à 8 où le composé aryloxyphénoxypropionate est appliqué à un taux compris entre 10 et 30 g/ha et où le composé cyclohexanedione est appliqué à un taux compris entre 20 et 60 g/ha.

17. Utilisation de la composition herbicide selon l'une des clauses 1 à 8 où le composé aryloxyphénoxypropionate est appliqué à un taux de 14 g/ha et où le composé cyclohexanedione est appliqué à un taux compris de 28 g/ha.

18. Utilisation de la composition herbicide selon l'une des clauses 1 à 8 où le composé aryloxyphénoxypropionate est appliqué à un taux de 24,5 g/ha et où le composé cyclohexanedione est appliqué à un taux compris de 49 g/ha.

**Revendications**

1. Composition herbicide comprenant un premier composé appartenant à la famille des aryloxyphénoxypropionates et un second composé appartenant à la famille des cyclohexanediones, dans laquelle le premier composé et le second composé sont présents dans la composition dans un rapport massique allant de 1:1,5 à 1:4 ; et dans laquelle la quantité du second composé dans la composition est 1,5 à 4 fois supérieure à la quantité du premier composé,

dans laquelle le premier composé appartenant à la famille des aryloxyphénoxypropionates est sélectionné parmi le quizalofop-p-éthyl, le propaquizafop, le quizalofop-p-téfuryle, les isomères et les sels de ces composés, et
dans laquelle le second composé appartenant à la famille des cyclohexanediones est sélectionné parmi la cléthodime, les isomères ou les sels de ces composés.

2. Composition herbicide selon la revendication 1, dans laquelle le premier composé et le second composé sont présents dans la composition dans un rapport massique allant de 1:1,5 à 1:2,2 ; et dans laquelle la quantité du second composé dans la composition est de 1,5 à 2,2 fois supérieure à la quantité du premier composé.

3. Composition herbicide selon la revendication 1, dans laquelle le premier composé et le second composé sont présents dans la composition dans un rapport massique allant de 1:1,5 à 1:8 ; et dans laquelle la quantité du second composé dans la composition est de 1,5 à 1,8 fois supérieure à la quantité du premier composé.

4. Composition herbicide selon la revendication 1, dans laquelle le premier composé et le second composé sont présents dans la composition dans un rapport massique de 1:2.

5. Composition herbicide selon la revendication 1, dans laquelle le premier composé et le second composé sont présents dans la composition dans un rapport massique allant de 1:2,2 à 1:4 ; et dans laquelle la quantité du second composé dans la composition est de 2,2 à 4 fois supérieure à la quantité du premier composé.

6. Composition herbicide selon l'une quelconque des revendications précédentes, dans laquelle le premier composé appartenant à la famille des aryloxyphénoxypropionates est le quizalofop-p-éthyl et le second composé appartenant à la famille des cyclohexanediones est la cléthodime.

7. Composition herbicide selon l'une quelconque des revendications précédentes 1 à 6, dans laquelle la concentration massique du premier composé appartenant à la famille des aryloxyphénoxypropionates est de 35 à 210 g/L de la composition totale et dans laquelle la concentration massique du second composé appartenant à la famille des cyclohexanediones est de 50 à 840 g/L de la composition totale.

8. Composition herbicide selon la revendication 7, dans laquelle la concentration massique du premier composé appartenant à la famille des aryloxyphénoxypropionates est de 70 g/L de la composition totale et dans laquelle la concentration massique du second composé appartenant à la famille des cyclohexanediones est de 140 g/L de la composition totale.

9. Utilisation de la composition herbicide selon l'une des revendications 1 à 8 pour contrôler au moins une mauvaise herbe appartenant à la famille des graminées, sélectionnée parmi le pâturin annuel (Poa annua) et/ou le chiendent commun (Elytrigia repens) et/ou le brome (Bromus sp.) et/ou la repousse de céréales, notamment le blé tendre (Triticum aestivum) et/ou l'orge (Hordeum vulgare), et/ou les ray-grass (Lolium sp.) et/ou le vulpin des champs (*Alopecurus* myosuroides) et/ou la digitaire sanguine (Digitaria sanguinalis) et/ou le panic pied-de-coq (Echinochloa crus-galli) et/ou le panic faux-millet (Panicum miliaceum) et/ou les sétaires (Setaria sp.) et/ou le sorgho d'Alep (Sorghum halepense).

10. Utilisation selon la revendication 9 pour le traitement de cultures dicotylédones.

11. Utilisation selon la revendication 10, dans laquelle la culture dicotylédone est choisie parmi le colza (Brassica napus), la betterave (Beta vulgaris), le pois protéagineux (Pisum sativum), le tournesol (Helianthus annuus), le lin (Linum usitatissimum), le soja (Glycine max) et la luzerne (Medicago sativa).

12. Utilisation selon l'une quelconque des revendications 9 à 11, dans laquelle le composé aryloxyphénoxypropionate est appliqué à un taux compris entre 8,5 et 315 g/ha et dans laquelle le composé cyclohexanedione est appliqué à un taux compris entre 20 et 670 g/ha.

13. Utilisation selon l'une quelconque des revendications 9 à 11, dans laquelle le composé aryloxyphénoxypropionate est appliqué à un taux compris entre 10 et 30 g/ha et dans laquelle le composé cyclohexanedione est appliqué à un taux compris entre 20 et 60 g/ha.

14. Utilisation selon la revendication 13, dans laquelle le composé aryloxyphénoxypropionate est appliqué à un taux de 14 g/ha et où le composé cyclohexanedione est appliqué à un taux de 28 g/ha.

15. Utilisation selon la revendication 13, dans laquelle le composé aryloxyphénoxypropionate est appliqué à un taux de 24,5 g/ha et où le composé cyclohexanedione est appliqué à un taux de 49 g/ha.

Europäisches
Patentamt

European
Patent Office

Office européen
des brevets

# RAPPORT DE RECHERCHE EUROPEENNE

Numéro de la demande

**EP 22 18 3943**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 629 262 A (AUXIER BARBARA G [US] ET AL) 13 mai 1997 (1997-05-13) <br> * colonne 5, lignes 10-27,56-64 * <br> * colonne 2, lignes 28-54 * <br> * colonne 3, ligne 13 - colonne 4, ligne 25 * <br> ----- | 1-15 | INV. <br> A01P13/00 <br> A01N35/10 <br> A01N43/60 |
| X | CN 102 696 617 A (SANDA CHEMICAL NANTONG CO LTD) 3 octobre 2012 (2012-10-03) <br> * revendications 1-4 * <br> * exemples 1-3 * <br> * abrégé * <br> ----- | 1-15 | |
| X | CN 101 326 917 A (BEIJING NUTRICHEM LAB CO LTD [CN]) 24 décembre 2008 (2008-12-24) <br> * exemples 18,18(2),28 * <br> * revendications 1-7 * <br> * abrégé * <br> * exemple 10 * <br> * pages 19-20; tableau 1 * <br> ----- | 1-15 | |
| X | CN 1 759 673 A (YINGXINTAIKANG TECH CO LTD BEI [CN]) 19 avril 2006 (2006-04-19) <br> * exemples 18,28 * <br> * abrégé * <br> * page 7, alinéa 6 * <br> * exemples 4,10 * <br> ----- | 1-15 | DOMAINES TECHNIQUES RECHERCHES (IPC) <br><br> A01N |
| X | WO 03/030642 A1 (SYNGENTA PARTICIPATIONS AG [CH]; HOWARD STOTT WILLIE [CH]) 17 avril 2003 (2003-04-17) <br> * CAS-RN 512171-40-3: tepraloxydim+fluazifop-butyl+fomesafen * <br> * revendications 3,4 * <br> ----- <br><br> -/-- | 1-15 | |

Le présent rapport a été établi pour toutes les revendications

| Lieu de la recherche | Date d'achèvement de la recherche | Examinateur |
|---|---|---|
| Munich | 7 décembre 2022 | Marie, Gérald |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

**EP 22 18 3943**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 00/03591 A2 (HOECHST SCHERING AGREVO GMBH [DE] AVENTIS CROPSCIENCE GMBH [DE]) 27 janvier 2000 (2000-01-27) * CAS-RN 255871-82-0: profoxydim+fenoxaprop-P-ethyl * * tableau 6 * | 1-15 | |
| X | EP 0 542 687 A1 (CIBA GEIGY AG [CH]) 19 mai 1993 (1993-05-19) * revendications 1-8 * * tableaux 1-4 * | 1-15 | |
| X | AU 587 549 B2 (ICI AUSTRALIA LTD.) 17 août 1989 (1989-08-17) * revendication 7 * | 1-15 | |
| X | CHAMBERS A ET AL: "Annual ryegrass and volunteer cereal control in lupins using selective post-emergent herbicides", AUSTRALIAN JOURNAL OF EXPERIMENTAL AGRICULTURAL AND ANIMALHUSBANDRY,, vol. 35, 1 janvier 1995 (1995-01-01), pages 1141-1149, XP009176655, ISSN: 0045-060X * abrégé * * CAS-RN 1756126-52-1; tableau 2 * | 1-15 | DOMAINES TECHNIQUES RECHERCHES (IPC) |

-/--

Le présent rapport a été établi pour toutes les revendications

| Lieu de la recherche | Date d'achèvement de la recherche | Examinateur |
|---|---|---|
| Munich | 7 décembre 2022 | Marie, Gérald |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
..............................................................................
& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

**Numéro de la demande**

**EP 22 18 3943**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DATABASE CAPLUS [Online] CHEMICAL ABSTRACTS SERVICE, COLUMBUS, OHIO, US; HARKER, K. NEIL ET AL: "Synergistic mixtures of sethoxydim and fluazifop on annual grass weeds", XP002727278, extrait de STN Database accession no. 1991:650235 * abrégé * * CAS-RN 137307-84-7: sethoxydim+fluazifop * & HARKER, K. NEIL ET AL: "Synergistic mixtures of sethoxydim and fluazifop on annual grass weeds", WEED TECHNOLOGY , 5(2), 310-16 CODEN: WETEE9; ISSN: 0890-037X, 1991, | 1-15 | |
| | ----- | | |
| X | DREW A C E A ET AL: "Herbicide use, productivity, and nitrogen fixation in field pea (Pisum sativum)", AUSTRALIAN JOURNAL OF AGRICULTURAL RESEARCH, ORGANIZATION, MELBOURNE, AU, vol. 58, no. 12, 1 janvier 2007 (2007-01-01), pages 1204-1214, XP009179101, ISSN: 0004-9409 * tableaux 1,3,4 * | 1-15 | **DOMAINES TECHNIQUES RECHERCHES (IPC)** |
| | ----- | | |
| X | US 5 428 001 A (SOMERS DAVID A [US] ET AL) 27 juin 1995 (1995-06-27) * revendications 1,11 * | 1-15 | |
| | ----- | | |
| | -/-- | | |

Le présent rapport a été établi pour toutes les revendications

| Lieu de la recherche | Date d'achèvement de la recherche | Examinateur |
|---|---|---|
| Munich | 7 décembre 2022 | Marie, Gérald |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 22 18 3943

## DOCUMENTS CONSIDERES COMME PERTINENTS

| Catégorie | Citation du document avec indication, en cas de besoin, des parties pertinentes | Revendication concernée |
|---|---|---|
| X | Selon: "Quick-FDS [ FICHE DE DONNEES DE SECURITE", , 17 février 1999 (1999-02-17), XP55575880, Extrait de l'Internet: URL:http://www.agridor.fr/BASE%20DOCUMENTA RE/FICHES%20SECURITE/FICHES%20U%20-%20Z/FD S%20V/VESUVE.pdf [extrait le 2019-03-29] * le document en entier * ----- | 1-15 |

**CLASSEMENT DE LA DEMANDE (IPC)**

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 7 décembre 2022 | Marie, Gérald |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................
& : membre de la même famille, document correspondant

EPO FORM 1503 03.82 (P04C02)

**EP 4 136 975 A1**

## ANNEXE AU RAPPORT DE RECHERCHE EUROPEENNE
## RELATIF A LA DEMANDE DE BREVET EUROPEEN NO.

EP 22 18 3943

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-12-2022

| Document brevet cité au rapport de recherche | | | Date de publication | Membre(s) de la famille de brevet(s) | | Date de publication |
|---|---|---|---|---|---|---|
| US 5629262 | A | | 13-05-1997 | AUCUN | | |
| CN 102696617 | A | | 03-10-2012 | AUCUN | | |
| CN 101326917 | A | | 24-12-2008 | AUCUN | | |
| CN 1759673 | A | | 19-04-2006 | AUCUN | | |
| WO 03030642 | A1 | | 17-04-2003 | AR | 036712 A1 | 29-09-2004 |
| | | | | BR | 0213028 A | 05-10-2004 |
| | | | | US | 2004242423 A1 | 02-12-2004 |
| | | | | WO | 03030642 A1 | 17-04-2003 |
| WO 0003591 | A2 | | 27-01-2000 | AR | 019919 A1 | 27-03-2002 |
| | | | | AT | 294501 T | 15-05-2005 |
| | | | | AU | 4782099 A | 07-02-2000 |
| | | | | BR | 9912828 A | 02-05-2001 |
| | | | | CN | 1309533 A | 22-08-2001 |
| | | | | CO | 5090899 A1 | 30-10-2001 |
| | | | | EP | 1104232 A2 | 06-06-2001 |
| | | | | JP | 4594525 B2 | 08-12-2010 |
| | | | | JP | 2002520340 A | 09-07-2002 |
| | | | | KR | 20010079539 A | 22-08-2001 |
| | | | | KR | 20090037507 A | 15-04-2009 |
| | | | | MX | 240920 B | 09-10-2006 |
| | | | | MY | 125800 A | 30-08-2006 |
| | | | | TR | 200100101 T2 | 21-06-2001 |
| | | | | US | 2002123428 A1 | 05-09-2002 |
| | | | | US | 2003069138 A1 | 10-04-2003 |
| | | | | US | 2013130899 A1 | 23-05-2013 |
| | | | | US | 2013143743 A1 | 06-06-2013 |
| | | | | WO | 0003591 A2 | 27-01-2000 |
| EP 0542687 | A1 | | 19-05-1993 | AU | 652298 B2 | 18-08-1994 |
| | | | | CA | 2082845 A1 | 16-05-1993 |
| | | | | CN | 1072312 A | 26-05-1993 |
| | | | | EP | 0542687 A1 | 19-05-1993 |
| | | | | FI | 925122 A | 16-05-1993 |
| | | | | LV | 10150 A | 20-10-1994 |
| | | | | MA | 22712 A1 | 01-07-1993 |
| | | | | NZ | 245130 A | 27-09-1994 |
| | | | | PL | 296584 A1 | 02-11-1993 |
| | | | | SI | 9200322 A | 30-06-1993 |
| | | | | SK | 322292 A3 | 06-12-1995 |
| | | | | TN | SN92104 A1 | 08-06-1993 |
| | | | | US | 5296449 A | 22-03-1994 |

EPO FORM P0460

Pour tout renseignement concernant cette annexe : voir Journal Officiel de l'Office européen des brevets, No.12/82

## ANNEXE AU RAPPORT DE RECHERCHE EUROPEENNE
## RELATIF A LA DEMANDE DE BREVET EUROPEEN NO.

EP 22 18 3943

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-12-2022

| Document brevet cité au rapport de recherche | | Date de publication | Membre(s) de la famille de brevet(s) | | Date de publication |
|---|---|---|---|---|---|
| | | | UY | 23503 A1 | 11-03-1993 |
| AU 587549 | B2 | 17-08-1989 | AUCUN | | |
| US 5428001 | A | 27-06-1995 | AUCUN | | |

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004080171 A
- US 5629262 A